# EUROPÄISCHE PATENTSCHRIFT

(11) **EP 1 844 378 B1**
(45) Veröffentlichungstag und Bekanntmachung des Hinweises auf die Patenterteilung: **29.07.2009**
(21) Anmeldenummer: 05818988.7
(22) Anmeldetag: 13.12.2005
(51) Int. Cl.: G05D 16/20

(54) **ELEKTROMAGNETISCHE DRUCKREGELVENTILEINRICHTUNG MIT INTEGRIERTEM DRUCKSENSOR**
ELECTROMAGNETIC PRESSURE CONTROL VALVE DEVICE PROVIDED WITH AN INTEGRATED PRESSURE SENSOR
DISPOSITIF DE SOUPAPE DE REGULATION DE PRESSION ELECTROMAGNETIQUE A CAPTEUR DE PRESSION INTEGRE

(30) Priorität: 28.01.2005 DE 102005004080
(43) Veröffentlichungstag der Anmeldung: 17.10.2007
(73) Patentinhaber: ROBERT BOSCH GMBH, 70442 Stuttgart (DE)
(72) Erfinder: FLEISCHER, Walter, 70469 Stuttgart (DE); SCHUDT, Klaus, 74226 Nordheim (DE); OTT, Christof, 71732 Asperg (DE); FOERCH, Ulrich, 71638 Ludwigsburg (DE)
(86) Internationale Anmeldenummer: PCT/EP2005/056724
(87) Internationale Veröffentlichungsnummer: WO 2006/079434

(56) Entgegenhaltungen:
- EP-A- 0 357 964
- EP-A- 0 840 017
- EP-A- 0 971 278
- EP-A- 1 236 898
- EP-A- 1 406 142
- US-A- 4 796 661
- US-A1- 2003 029 180
- US-A1- 2005 045 237
- US-B1- 6 422 206

## Beschreibung

### Stand der Technik

Die Erfindung betrifft eine elektromagnetische Druckregelventileinrichtung zur Regelung eines Hydraulikdrucks beinhaltend ein Druckregelventil mit einem Magnetteil, das wenigstens einen eine elektrische Spule tragenden Spulenkörper, einen Spulenkern und einen verschieblich geführten Anker aufweist, mit einem Ventilteil, das wenigstens einen Zulaufanschluss, einen Rücklaufanschluss, einen Verbraucheranschluss und ein vom Anker betätigtes und mit einem Ventilsitz zusammenwirkendes Ventilschließglied aufweist, und mit einem Elektronikteil, das wenigstens einen Drucksensor zur Messung des am Verbraucheranschluss anstehenden Hydraulikdrucks aufweist, gemäß dem Oberbegriff von Patentanspruch 1.

Zur Ansteuerung von Kupplungen in Stufen-Automatikgetrieben werden Vorsteuerventile mit nachgeschalteten hydraulischen Verstärker- bzw. Stellgliedern zur Variation von Kupplungsdrücken angewandt. Dabei wird der Vorsteuerdruck über eine vorwärts gerichtete Wirkkette, also gesteuert, eingestellt. Dieses Prinzip hat zwei entscheidende Nachteile: Weder die Zeitvarianz der Strecke, bedingt durch Änderungen der Umgebungsbedingungen (z.B. Temperatur), noch auftretende Störgrößen (z.B. Änderung des Zulaufdrucks) können ausreichend kompensiert werden. Somit ist sowohl das stationäre als auch das dynamische Verhalten unbefriedigend. Diese Nachteile werden durch einen geschlossenen Regelkreis weitgehend eliminiert, wobei ein wesentlicher Bestandteil des Regelkreises ein die Regelgröße messendes Sensorglied, im vorliegenden Fall ein Drucksensor bildet.

Vorteilhaft ist es, den Drucksensor in das elektrohydraulische Stellglied des Regelkreises, d.h. in das Druckregelventil zu integrieren, da dadurch der Montageaufwand beim Kunden reduziert wird. Eine solche Lösung ist beispielsweise in der gattungsbildenden EP 0 971 278 A1 beschrieben. Dort wird der zu regelnde Druck durch einen im Magnetteil und genauer in einem Ankergehäuse des Druckregelventils angeordneten Drucksensor gemessen. Das im Ventilteil vorhandene Drucksignal muss hierzu durch das Ankergehäuse hindurch geführt werden. Die hierzu durch das Ankergehäuse geführte Druckverbindung entspricht im hydraulischen Sinne einer langen Leitung mit vergleichsweise hoher geometrischer Komplexität und Länge und stellt eine hydraulische Übertragungsstrecke dar, entlang welcher die Messgröße Druck gefiltert wird. Dadurch ändern sich sowohl Amplitude als auch Phase des Signals, was insofern von Nachteil ist, als Drucksignale nur bis zu einer relativ niedrigen Grenzfrequenz originalgetreu übertragen werden können. Infolgedessen kann es zu einer unerwünschten Verfälschung des Messergebnisses kommen.

### Vorteile der Erfindung

Die Erfindung basiert auf dem Gedanken, den zu messenden Hydraulikdruck möglichst nahe des Ventilteils zu messen, da dort die Druckänderung erzeugt wird. Deshalb wird der Drucksensor an einem dem Ventilteil zugewandten Ende des Magnetteils angeordnet. Durch die ventilteilnahe Anordnung des Drucksensors wird die Filterwirkung der Übertragungsstrecke deutlich reduziert und der zu messende Hydraulikdruck kann bis zu einer deutlich höheren Eckfrequenz fehlerfrei übertragen werden. Dies führt zu einer höheren Mess- und folglich auch zu einer höheren Regelgenauigkeit des Druckregelventils.

Eine unmittelbare Anordnung des Drucksensors am oder im Ventilteil selbst scheitert in der Praxis daran, dass Druckregelventile oftmals mit ihrem Ventilteil in eine Aufnahmebohrung eines Ventilblocks eingesetzt werden und nur noch der Magnetteil aus der Aufnahmebohrung herausragt. Dann kann der mit elektrischen Kabeln verbundene Drucksensor aus Platzgründen nicht unmittelbar am Ventilteil platziert werden.

Durch die in den Unteransprüchen aufgeführten Maßnahmen sind vorteilhafte Weiterbildungen und Verbesserungen der im unabhängigen Patentanspruch angegebenen Erfindung möglich.

Bei dem elektromagnetischen Druckregelventil gemäß der EP 0 971 278 A1 muss der Drucksensor über fünf elektrische Leitungen mit dem entfernt angeordneten Steuergerät in Verbindung stehen, wobei eine Leitung zur Übertragung des Drucksensorsignals, eine weitere Leitung als Masseleitung für den Drucksensor, eine weitere Leitung zur Spannungsversorgung des Drucksensors, eine weitere Leitung zur Masseleitung für die Spule und eine weitere Leitung zur Spannungsversorgung der Spule dient. Dabei besteht allerdings die Gefahr, dass das Sensorsignal aufgrund elektromagnetischer Störungen verfälscht wird.

Gemäß einer besonders zu bevorzugenden Ausführungsform der Erfindung wird nicht nur der Drucksensor, sondern auch die Signal- und Leistungselektronik zum Betrieb des elektromagnetischen Druckregelventils in seinen Elektronikteil integriert. In diesem Fall findet die Übertragung leistungsschwacher Sensorsignale auf sehr kurzen Wegstrecken innerhalb des Elektronikgehäuses statt und die EMV-Empfindlichkeit wird reduziert. Beispielsweise beinhaltet der in das Druckregelventil integrierte Elektronikteil neben dem Drucksensor wenigstens eine der folgenden Einrichtungen: Eine Spannungsversorgung für den Drucksensor, eine Kommunikationsschnittstelle zu einem übergeordneten elektronischen Steuergerät, einen Mikroprozessor oder eine analoge Regelelektronik, welcher aus einer Regelabweichung zwischen einem Druck-Istwert und einem Druck-Sollwert die Stellgröße berechnet, eine Leistungselektronik zur Spannungsversorgung der Spule, Kondensatoren zur Signalfilterung und zur EMV (Elektromagnetische Verträglichkeit)-Absicherung sowie eine Diagnoseeinrichtung. Das übergeordnete elektronische Steuergerät kann zur Ansteuerung mehrerer Druckregelventile ausgebildet sein, die Berechnung der Regelabweichungen der verschiedenen Druckregelventile soll vorzugsweise jedoch in dem Elektronikteil des jeweiligen Druckregelventils selbst erfolgen.

Aufgrund der geringeren Distanzen für die elektrische Übertragung der Sensorsignale kann auf eine kostenintensive Abschirmung verzichtet werden. Bei der Integration der Regel- und Leistungselektronik in das Druckregelventil kann dieses mit nur drei Anschlussleitungen realisiert werden. Über eine Leitung wird die Versorgungsspannung übertragen, über eine weitere bidirektionale Leitung die Führungsgröße (Druck) und Diagnose/Statusinformationen und eine dritte Leitung bildet die Verbindung zur Masse. Dadurch verringert sich die Anzahl der Verbindungsleitungen zwischen dem Zentralsteuergerät und dem Druckregelventil von fünf auf drei Leitungen. Insbesondere ist vorteilhaft, dass gering bestromte Leitungen wegfallen und somit hier die bekannte Problematik der dann geringen Selbstreinigung von Kontakten in verschmutzter Umgebung entfällt. Die einzige Signalleitung überträgt dann beispielsweise sowohl die Führungsgröße als auch das Diagnose/Statussignal mit bidirektionalem Protokoll. Zur Verbesserung der elektromagnetischen Robustheit wird beispielsweise ein pulsweitenmoduliertes Signal verwendet. Die Übertragung kann digital und mit Zeitsteuerung erfolgen. Dieses Protokoll hat folgende Vorteile:
- Es ist robust gegenüber elektromagnetischer Beeinflussung,
- es kann ohne wesentliche Einbußen so befiltert werden, dass es selbst wenig Störspannung aussendet (geringe Phasendrehung, für die Übertragung der Führungsgroße tolerierbar),
- es kann in der Stromstärke so eingestellt werden, dass die Selbstreinigung von elektrischen Kontakten ausreichend gut ist und die Verlustleistung dennoch nicht zu groß wird.

Bevorzugt ist das Elektronikteil im Bereich eines dem Ventilteil zugewandten Endes der Spule und wenn das Druckregelventil mit seinem Ventilteil in eine Aufnahmebohrung eines Ventilblocks eingesetzt ist, besonders bevorzugt im Bereich einer Trennebene zwischen dem Ventilteil und dem aus der Aufnahmebohrung herausragenden Magnetteil angeordnet, genauer zwischen dem dem Ventilteil zugewandten Ende der Spule und der Trennebene.

Gemäß einer ersten Variante kann das Elektronikteil unmittelbar an einem die Spule tragenden Spulenkörper angeflanscht sein. Gemäß einer zweiten Variante kann das Elektronikteil unmittelbar an einem einen dem Verbraucheranschluss zugeordneten Filter tragenden und das Ventilteil zumindest teilweise umschließenden Filterträger angeflanscht sein.

In beiden Fällen muss eine kurze hydraulische Verbindung zwischen dem Drucksensor und dem Verbraucheranschluss oder mit einer im Ventilteil ausgebildeten, mit dem Verbraucheranschluss in Verbindung stehenden Druckkammer vorgesehen werden, welche dann bei der ersten Variante im Spulenkörper und gemäß der zweiten Variante im Filterträger ausgebildet ist.

Der Aufbau der erfindungsgemäßen Einrichtung wird am besten anhand der folgenden Beschreibung von Ausführungsbeispielen klar.

### Zeichnung

In der Zeichnung zeigt
- Fig.1: eine Querschnittsdarstellung eines elektromagnetischen Druckregelven- tils gemäß einer bevorzugten Ausführungsform der Erfindung;
- Fig.2: eine Querschnittsdarstellung eines elektromagnetischen Druckregelven- tils gemäß einer weiteren Ausführungsform der Erfindung.

### Beschreibung der Ausführungsbeispiele

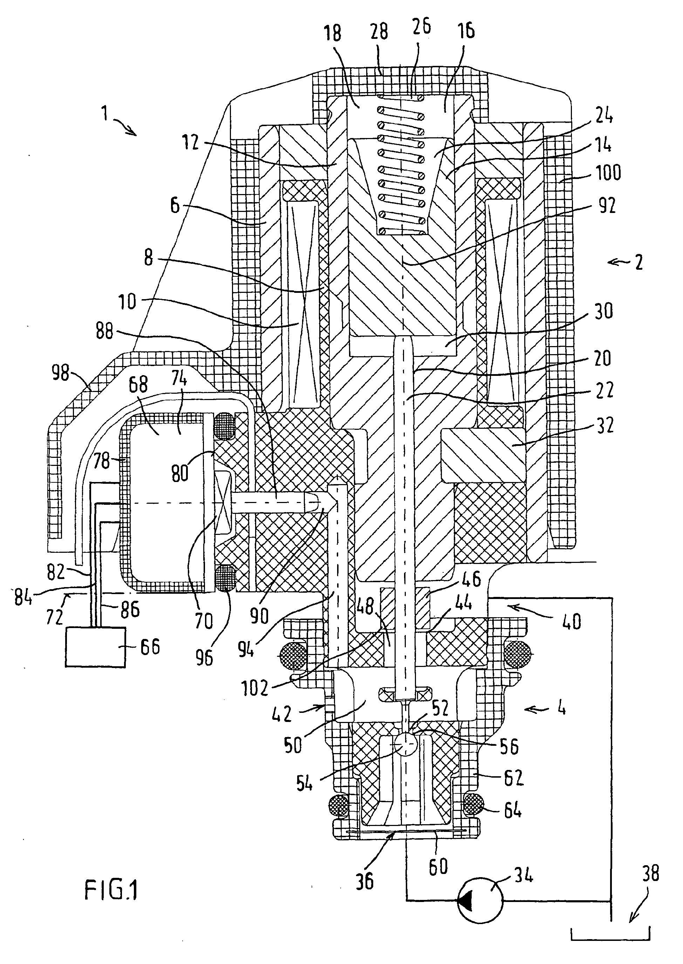

Das in Fig.1 gezeigte bevorzugte Ausführungsbeispiel eines elektromagnetischen Druckregelventils 1 einer erfindungsgemäßen Druckregelventileinrichtung dient beispielsweise zur Regelung des hydraulischen Steuerdrucks einer hydraulischen Kupplung in einem Stufen-Automatikgetriebe eines Kraftfahrzeugs. Das Druckregelventil 1 beinhaltet unter anderem ein Magnetteil 2 und ein Ventilteil 4.

Das Magnetteil 2 ist von einer Magnethülse 6 umschlossen und umfasst eine auf einen Spulenkörper 8 gewickelte Spule 10, einen in das Innere der Spule 10 hineinragenden Spulenkern 12 und einem im Spulenkern 12 axial beweglich geführten Anker 14. Hierzu weist der Spulenkern 12 eine gestufte Kernbohrung 16 auf, in deren durchmessergrößerem Abschnitt 18 der Anker 14 geführt ist, während in einem sich ventilteilseitig anschließenden Bohrungsabschnitt 20 kleineren Durchmessers ein Stellkolben 22 längsbeweglich gelagert ist, der einendseitig eine Stirnseite des Ankers 14 kontaktiert. Mit einer Zentrierbohrung 24 an seiner anderen Stirnseite ist der Anker 14 durch eine Rückstellfeder 26 gegen eine auf das vom Ventilteil 4 abgewandte Ende des Spulenkerns 12 aufgesetzte Kappe 28 abgestützt. Zwischen der einen Stirnseite des Ankers 14 und dem Boden des durchmessergrößeren Bohrungsabschnitts 18 der Kernbohrung 16 besteht in axialer Richtung ein Arbeitsspalt 30. Der Spulenkörper 8 erstreckt in axialer Richtung gesehen im wesentlichen vom einen freien Ende des Magnetteils 2 bis zum freien Ende des Ventilteils 4, wobei er an seinem dem Ventilteil 4 zugewandten Ende eine Flussgabel 32 trägt.

Das Ventilteil 4 wiederum weist einen beispielsweise mit der Druckseite eines Druckerzeugers 34 in Verbindung stehenden Zulaufanschluss 36, einen mit einem Tank 38 für das Hydraulikfluid verbundenen Rücklaufanschluss 40, einen mit der Kupplung verbundenen Verbraucheranschluss 42 und ein vom Anker 14 betätigtes und mit einem Ventilsitz 44 zusammenwirkendes Stellelement 46 auf. Das Stellelement besteht beispielsweise in einer vom Stellkolben 22 getragenen Sitzscheibe 46, welche mit einem im Spulenkörper 8 ausgebildeten Flachsitz 44 zusammenwirkt. Der Flachsitz 44 ist an einem Bohrungsrand einer zentralen Durchgangsbohrung 48 des Spulenkörpers 8 ausgebildet, die den Rücklaufanschluss 40 mit einer Druckkammer 50 verbindet, wenn die Sitzscheibe 46 vom Flachsitz 44 abgehoben ist. Auf der anderen Seite der Druckkammer 50 weist der Spulenkörper 8 eine weitere, als Drosselbohrung ausgebildete Durchgangsbohrung 52 auf, durch welche der Stellkolben 22 anderendseitig ragen und eine Schließkugel 54 kontaktieren kann, welche einen an dem von der Druckkammer 50 abgewandten Rand der Drosselbohrung 52 ausgebildeten Ventilsitz 56 abhängig von der Stellung des Stellkolbens 22 verschließen bzw. frei geben und damit eine Strömungsverbindung zwischen der Druckkammer 50 und den Zulaufanschluss 36 am Boden des Ventilteils 4 herstellen oder sperren kann. Durch ein dem Zulaufanschluss 36 im Strömungssinn vorgeordnetes Siebfilter 60 wird verhindert, dass Verunreinigungen im Hydraulikfluid in das Druckregelventil 1 gelangen.

Das Siebfilter 60 wird von einem hülsenförmigen Filterträger 62 getragen, welcher im wesentlichen den gesamten Umfang des Ventilteils 4 umschließt. Insbesondere bildet der Filterträger 62 eine Umfangswandung der Druckkammer 50, in welcher der Verbraucheranschluss 42 ausgebildet ist und trägt an seiner radial äußeren Umfangsfläche O-Ringe 64, über welche ein Ausströmen von Hydraulikfluid gegenüber der nicht gezeigten Wandung einer Aufnahmebohrung verhindert werden soll, in welche das Ventilteil 4 gesteckt ist und aus welcher das Magnetteil 2 herausragt. In dem Ventilblock können weitere Druckregelventile aufgenommen sein, welche von einem gemeinsamen, übergeordneten elektronischen Steuergerät 66 angesteuert sind.

Im weiteren weist das Druckregelventil 1 ein Elektronikteil 68 auf, das wenigstens einen Drucksensor 70 zur Messung des am Verbraucheranschluss 42 anstehenden Hydraulikdrucks umfasst. Bevorzugt ist das den Drucksensor 70 beinhaltende Elektronikteil 68 im Bereich eines dem Ventilteil 4 zugewandten Endes der Spule 10 und im vorliegenden Fall, wenn das Druckregelventil 1 mit seinem Ventilteil 4 in eine Aufnahmebohrung eines Ventilblocks eingesetzt ist, besonders bevorzugt im Bereich einer Trennebene 72 zwischen dem Ventilteil 4 und dem aus der Aufnahmebohrung herausragenden Magnetteil 2 angeordnet, genauer zwischen dem dem Ventilteil 4 zugewandten Ende der Spule 10 und der Trennebene 72.

Gemäß einer besonders zu bevorzugenden Ausführungsform der Erfindung wird nicht nur der Drucksensor 70, sondern auch die Signal- Regel- und Leistungselektronik 74 zum Betrieb des elektromagnetischen Druckregelventils 1 in seinem Elektronikteil 68 integriert. Beispielsweise beinhaltet der in das Druckregelventil 1 integrierte Elektronikteil 68 neben dem Drucksensor 70 wenigstens eine der folgenden Einrichtungen: Eine Spannungsversorgung für den Drucksensor 70, eine Kommunikationsschnittstelle zu dem übergeordneten elektronischen Steuergerät 66, einen Mikroprozessor oder eine analoge Regelelektronik, welcher aus einer Regelabweichung zwischen einem Druck-Istwert und einem Druck-Sollwert die Stellgröße berechnet, eine Leistungselektronik zur Spannungsversorgung der Spule, Kondensatoren zur Signalfilterung und zur EMV (Elektromagnetische Verträglichkeit)-Absicherung sowie eine Diagnoseeinrichtung.

Gemäß einer weiteren Ausführungsform kann das Elektronikteil 68 nur den Drucksensor 70 beinhalten und das Sensorsignal wird durch eine einzelne Signalleitung an das übergeordnete Steuergerät 66 übertragen.

Der Elektronikteil 68 ist beispielsweise in einem separaten Elektronikgehäuse 78 untergebracht, welches an eine seitliche Anschlussfläche 80 des Spulenkörpers 8 angeflanscht ist. Bei der Integration der Signal- Regel- und Leistungselektronik 74 in das Elektronikteil 68 des Druckregelventils 1 können mit nur drei elektrischen Anschlussleitungen alle notwendigen Verbindungen zum übergeordneten Steuergerät 66 hergestellt werden. Über eine Leitung 82 wird die Versorgungsspannung übertragen, über eine weitere bidirektionale Leitung 84 die Führungsgröße (Druck) und Diagnose/Statusinformationen und eine dritte Leitung 86 bildet die Verbindung zur Masse.

Aus dem Elektronikgehäuse 78 ragt ein hydraulisches Anschlussrohr 88 des Drucksensors 70, welcher in einer in dem Spulenkörper 8 ausgebildeten Querbohrung 90 aufgenommen ist, welche ihrerseits über einen axialen, sich parallel zu einer Mittelachse 92 des Druckregelventils 1 erstreckenden Verbindungskanal 94 im Spulenkörper 8 mit der Druckkammer 50 bzw. mit dem Verbraucheranschluss 42 in Verbindung steht. Da der Spulenkörper 8 vorzugsweise durch einen Spritzgussformling aus Kunststoff gebildet wird, bietet er die Möglichkeit, ohne fertigungstechnischen Mehraufwand einen hydraulischen Anschluss für den im Elektronikteil integrierten Drucksensor 70 herzustellen. In Fig.1 sind die den Leitungen 82, 84, 86 entsprechenden Anschlusspins des Elektronikteils 68 gezeigt, welche durch einen zugeordneten Stecker vorzugsweise mit einer Schneid-Klemm-Verbindung oder einem Druckkontakt kontaktiert werden.

Eine besondere Schwierigkeit in hydraulischen Systemen stellt die Entlüftung dar. Nicht entlüftete Drucksensoranschlüsse können durch die mit der Luft eingebrachte zusätzliche Elastizität zu Fehlmessungen führen. Ein besonderer Vorteil der vorliegenden Lösung ist, dass eine Entlüftung des Drucksensors 70 ausgeführt werden kann, indem das hydraulische Anschlussrohr 88 ohne Dichtring in die Querbohrung 90 eingeführt wird. Durch eine geeignete Gestaltung dieser Querbohrung 90, beispielsweise durch gezieltes Einbringen von Oberflächenrauhigkeit, Längsnuten, oder Unrundheit in die radial innere Umfangsfläche der Querbohrung 90 kann über eine geringe Leckage eine Zwangsentlüftung des Drucksensors 70 erreicht werden. Um den Drucksensor 70 zwischen einer Anschlussfläche 80 des Spulenkörpers 8 und einem Steckergehäuse 98 elastisch zu spannen, ist zwischen einem Boden des Elektronikgehäuses 78 und der Anschlussfläche 80 beispielsweise ein O-Ring 96 angeordnet.

Andererseits definiert die Stirnfläche des Anschlussrohres 88 des Drucksensors 70 eine Fläche, auf welche der zu messende, am Verbraucheranschluss 42 anstehende Hydraulikdruck wirkt. Die hieraus resultierende Druckkraft wird durch ein Steckergehäuse 98 aus Spritzkunststoff abgestützt, das mit einem angespritzten Ringabschnitt 100 über die Magnethülse 6 geschoben ist und das Elektronikgehäuse 78 umgreift. Somit werden die auf den Drucksensor 70 wirkenden Kräfte im Druckregelventil 1 selbst abgestützt.

Vor diesem Hintergrund ist die Funktionsweise der Druckregeleinrichtung wie folgt: Im unbestromten Zustand der Spule wird die Schließkugel 54 aufgrund des am Zulaufanschluss 36 herrschenden, an der Druckseite des Druckerzeugers 34 anstehenden Hydraulikdrucks gegen den zugeordneten Ventilsitz 56 gespannt. Die relativ schwache Rückstellfeder 26, deren Druckkraft über den Anker 14 und den Stellkolben 22 auf die Schließkugel 54 übertragen wird, vermag diese jedoch nicht vom Ventilsitz 56 abzuheben. Somit ist der Zulaufanschluss 36 gegenüber dem Verbraucheranschluss 42 und dem Rücklaufanschluss 40 gesperrt. Jedoch ist die Sitzscheibe 46 von ihrem zugeordneten Flachsitz 44 abgehoben, so dass Hydraulikfluid von der Kupplung über den Verbraucheranschluss 42 zu dem mit dem Rücklaufanschluss 40 verbundenen Tank 38 abströmen kann. Dabei befindet sich eine Steuerkante 102 der Sitzscheibe 46 in einer Position, in der sie keine Drosselfunktion ausübt, so dass am Verbraucheranschluss 42 der Druck des Rücklaufanschlusses 40 herrscht.

Demgegenüber wird die Schließkugel 54 im bestromten Zustand der Spule 10 durch die durch Magnetkräfte bedingte Auslenkbewegung des Ankers 14 und des Stellkolbens 22 in Offenstellung gebracht. Dann strömt Hydraulikfluid vom Druckerzeuger 34 in den Zulaufanschluss 36 und von dort in die Drosselbohrung 52 ein und teilt sich in einen Teilstrom zum Verbraucheranschluss 42 und zum Rücklaufanschluss 40 hin. Die Sitzscheibe 46 hat sich dabei mit ihrer Steuerkante 102 dem Flachsitz 44 angenähert, so dass sie den vom Zulaufanschluss 58 zum Rücklaufanschluss 40 fließenden Teilstrom drosselt. Durch die Höhe des Stromflusses der Spule 10 kann das Maß der dem Anker 14 und damit dem Stellkolben 22 erteilten Auslenkbewegung elektrisch verändert werden, wodurch sich die Drosselverhältnisse der Steuerkante 102 und die Druckverhältnisse am Verbraucheranschluss 42 anwendungsspezifisch regeln lassen, beispielsweise dahingehend, dass der Teilstrom zum Verbraucheranschluss 42 vernachlässigbar ist und an ihm im wesentlichen nur ein Drucksignal anliegt, während der Teilstrom durch den Rücklaufanschluss 40 annährend dem gesamten Strom durch den Zulaufanschluss 58 entspricht.

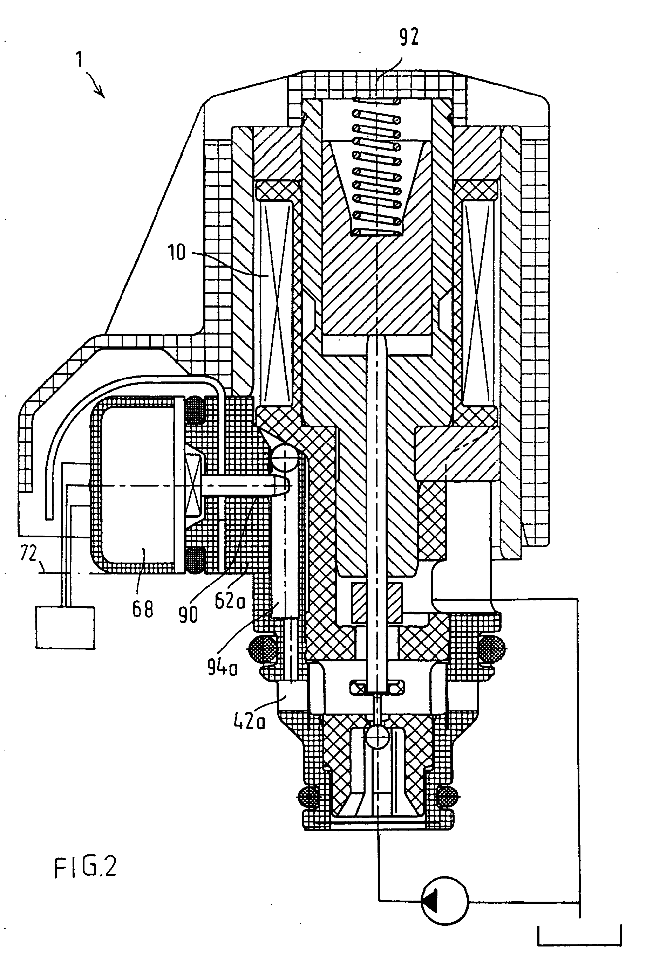

Das in Fig.2 gezeigte zweite Ausführungsbeispiel eines Druckregelventils 1 unterscheidet sich durch einen modifizierten Aufbau. Abgeänderte Bauteile des zweiten Ausführungsbeispiels sind im Folgenden durch den Index a gekennzeichnet, während für identische Bauteile die Positionsnummern der Fig.1 übernommen wurden.

Einer der Unterschiede besteht darin, dass das Elektronikteil 68 unmittelbar am Filterträger 62a angeflanscht ist, welcher sich zumindest einseitig über die Trennebene 72 hinaus bis im wesentlichen zum Niveau des ventilteilseitigen Endes der Spule 10 erstreckt. Im weiteren mündet der sich parallel zur Mittelachse 92 des Druckregelventils 1 erstreckende, von der der Querbohrung 90 ausgehende Verbindungskanal 94a direkt in den Verbraucheranschluss 42a und ist wie dieser im Filterträger 62a ausgebildet.

## Patentansprüche

1. Elektromagnetische Druckregelventileinrichtung zur Regelung eines Hydraulikdrucks beinhaltend wenigstens ein Druckregelventil (1) mit einem Magnetteil (2), das wenigstens einen eine elektrische Spule (10) tragenden Spulenkörper (8), einen Spulenkern (12) und einen verschieblich geführten Anker (14) aufweist,
einem Ventilteil (4), das wenigstens einen Zulaufanschluss (36), einen Rücklaufanschluss (40), einen Verbraucheranschluss (42) und ein vom Anker (14) betätigtes und mit einem Ventilsitz (44) zusammenwirkendes Stellelement (46) aufweist, wobei bei vom Ventilsitz (44) abgehobenem Stellelement (46) eine mit dem Verbraucheranschluss (42) verbundene Druckkammer (50) mit dem Rücklaufanschluss (40) in Verbindung steht und das Ventilteil (4) im weiteren eine Drosselstelle (52) zwischen der Druckkammer (50) und dem Zulaufanschluss (36) aufweist, welche mit einem einerseits vom Zulaufdruck und andererseits vom Anker (14) belasteten Schließglied (54) zusammenwirkt,
mit einer zwischen dem Ventilteil (4) und dem Magnetteil (2) angeordneten Trennebene (72), wobei das Druckregelventil (1) mit seinem Ventilteil (4) in eine Aufnahmebohrung eines Ventilblocks mit aus der Aufnahmebohrung herausragendem Magnetteil (2) einsetzbar ist,
und mit einem Elektronikteil (68), das wenigstens einen Drucksensor (70) zur Messung des am Verbraucheranschluss (42) anstehenden Hydraulikdrucks aufweist,
**dadurch gekennzeichnet, dass** von dem Elektronikteil (68) zumindest der Drucksensor (70) an einem dem Ventilteil (4) zugewandten Ende des Magnetteils (2) zwischen einem dem Ventilteil zugewandten Ende der Spule (10) und der Trennebene (72) angeordnet ist.

2. Druckregelventileinrichtung nach Anspruch 1, **dadurch gekennzeichnet, dass** das Elektronikteil (68) unmittelbar an dem die Spule (10) tragenden Spulenkörper (8) angeflanscht ist.

3. Druckregelventileinrichtung Anspruch 1, **dadurch gekennzeichnet, dass** das Elektronikteil (68) unmittelbar an einem einen dem Verbraucheranschluss (42) zugeordneten Filter (60) tragenden und das Ventilteil (4) zumindest teilweise umschließenden Filterträger (62a) angeflanscht ist.

4. Druckregelventileinrichtung nachwenigsten einem der vorhergehenden Ansprüche, **dadurch gekennzeichnet, dass** eine hydraulische Verbindung (94; 94a) zwischen dem Drucksensor (70) und dem Verbraucheranschluss (42; 42a) oder mit einer im Ventilteil (4) ausgebildeten, mit dem Verbraucheranschluss (42) in Verbindung stehenden Druckkammer (70) vorgesehen ist.

5. Druckregelventileinrichtung nach Anspruch 4 und Anspruch 2, **dadurch gekennzeichnet, dass** die hydraulische Verbindung (94) im Spulenkörper (8) ausgebildet ist.

6. Druckregelventileinrichtung nach Anspruch 4 und Anspruch 3, **dadurch gekennzeichnet, dass** die hydraulische Verbindung (94a) im Filterträger (62a) ausgebildet ist.

7. Druckregelventileinrichtung nach wenigstens einem der vorhergehenden Ansprüche, **dadurch gekennzeichnet, dass** das Elektronikteil (68) im weiteren wenigstens eine der folgenden Einrichtungen beinhaltet : Eine Spannungsversorgung für den Drucksensor (70), eine Kommunikationsschnittstelle zu einem übergeordneten elektronischen Steuergerät (66), einen Mikroprozessor oder eine analoge Regelelektronik, welcher aus einer Regelabweichung zwischen einem Druck-Istwert und einem Druck-Sollwert eine Stellgröße berechnet, eine Leistungselektronik (74) zur Spannungsversorgung der Spule, Kondensatoren zur Signalfilterung und zur EMV-Absicherung, eine Diagnoseeinrichtung.

8. Druckregelventileinrichtung nach Anspruch 7, **dadurch gekennzeichnet, dass** das Druckregelventil (1) über drei elektrische Leitungen mit dem elektronischen Steuergerät (66) in Verbindung steht: Einer Leitung (82) zur Spannungsversorgung, einer weiteren bidirektionalen Leitung (84) zur Übertragung der Führungsgröße (Druck) und von Diagnose und/oder Statusinformationen und einer weiteren Leitung (86) zur Verbindung mit Masse.

9. Druckregelventileinrichtung nach wenigstens einem der Ansprüche 1 bis 6, **dadurch gekennzeichnet, dass** das Elektronikteil (68) nur den Drucksensor (70) beinhaltet und das Sensorsignal durch eine Signalleitung an ein übergeordnetes Steuergerät (66) übertragen wird.

## Claims

1. Electromagnetic pressure-regulating valve device for regulating a hydraulic pressure, containing at least one pressure-regulating valve (1) with a magnetic part (2) which has at least one coil former (8) carrying an electrical coil (10), a coil core (12) and a displaceably guided armature (14),
with a valve part (4) which has at least one inflow connection (36), return connection (40), consumer connection (42) and actuating element (46) actuated by the armature (14) and cooperating with a valve seat (44), with the actuating element (46) lifted off from the valve seat (44) a pressure chamber (50) connected to the consumer connection (42) being connected to the return connection (40), and, furthermore, the valve part (4) having, between the pressure chamber (50) and the inflow connection (36) a throttle point (52) which cooperates with a closing member (54) loaded by the inflow pressure, on the one hand, and by the armature (14), on the other hand,
with a parting plane (72) arranged between the valve part (4) and the magnetic part (2), the pressure-regulating valve (1) being insertable with its valve part (4) into a reception bore of a valve block having a magnetic part (2) projecting out of the reception bore,
and with an electronic part (68) which has at least one pressure sensor (70) for measuring the hydraulic pressure prevailing at the consumer connection (42),
**characterized in that,** of the electronic part (68), at least the pressure sensor (70) is arranged at an end of the magnetic part (2) which faces the valve part (4), between an end of the coil (10) which faces the valve part and the parting plane (72).

2. Pressure-regulating valve device according to Claim 1, **characterized in that** the electronic part (68) is flanged directly on the coil former (8) carrying the coil (10).

3. Pressure-regulating valve device according to Claim 1, **characterized in that** the electronic part (68) is flanged directly on a filter carrier (62a) which carries a filter (60) assigned to the consumer connection (42) and which at least partially surrounds the valve part (4).

4. Pressure-regulating valve device according to at least one of the preceding claims, **characterized in that** a hydraulic connection (94; 94a) between the pressure sensor (70) and the consumer connection (42; 42a) or to a pressure chamber (70) formed in the valve part (4) and connected to the consumer connection (42) is provided.

5. Pressure-regulating valve device according to Claim 4 and Claim 2, **characterized in that** the hydraulic connection (94) is formed in the coil former (8).

6. Pressure-regulating valve device according to Claim 4 and Claim 3, **characterized in that** the hydraulic connection (94a) is formed in the filter carrier (62a).

7. Pressure-regulating valve device according to at least one of the preceding claims, **characterized in that** the electronic part (68) contains, furthermore, at least one of the following devices: a voltage supply for the pressure sensor (70), a communication interface with an overriding electronic control unit (66), a microprocessor or similar control electronics, which calculates a manipulated variable from a control deviation between a pressure actual value and a pressure desired value, power electronics (74) for the voltage supply of the coil, capacitors for signal filtration and EMC protection, and a diagnostic device.

8. Pressure-regulating valve device according to Claim 7, **characterized in that** the pressure-regulating valve (1) is connected to the electronic control unit (66) via three electrical lines: a line (82) for the voltage supply, a further bidirectional line (84) for transmitting the command variable (pressure) and diagnosis and/or status information, and a further line (86) for connection to earth.

9. Pressure-regulating valve device according to at least one of Claims 1 to 6, **characterized in that** the electronic part (68) contains only the pressure sensor (70) and the sensor signal is transmitted to an overriding control unit (66) by means of a signal line.

## Revendications

1. Dispositif de soupape de régulation de pression électromagnétique pour le réglage d'une pression hydraulique contenant au moins une soupape de régulation de pression (1), avec :
une partie magnétique (2) qui présente au moins un corps de bobine (8) portant une bobine électrique (10), un noyau de bobine (12) et une armature (14) guidée de manière déplaçable,
une partie de soupape (4) qui présente au moins un raccord d'entrée (36), un raccord de retour (40), un raccord de dispositif consommateur (42) et un élément de commande (46) actionné par l'armature (14) et coopérant avec un siège de soupape (44), une chambre de pression (50) connectée au raccord de dispositif consommateur (42) étant en liaison avec le raccord de retour (40) lorsque l'élément de commande (46) est soulevé par le siège de soupape (44), et la partie de soupape (4) présentant en outre un point d'étranglement (52) entre la chambre de pression (50) et le raccord d'entrée (36), lequel coopère avec un organe de fermeture (54) sollicité d'une part par la pression d'entrée et d'autre part par l'armature (14),
avec un plan de séparation (72) disposé entre la partie de soupape (4) et la partie magnétique (2), la soupape de régulation de pression (1) pouvant être insérée avec sa partie de soupape (4) dans un alésage de réception d'un bloc soupape avec la partie magnétique (2) saillant hors de l'alésage de réception,
et avec une partie électronique (68) qui présente au moins un capteur de pression (70) pour la mesure de la pression hydraulique appliquée au niveau du raccord de dispositif consommateur (42),
**caractérisé en ce qu'**au moins le capteur de pression (70) de la partie électronique (68) est disposé sur une extrémité de la partie magnétique (2) tournée vers la partie de soupape (4) entre une extrémité de la bobine (10) tournée vers la partie de soupape et le plan de séparation (72).

2. Dispositif de soupape de régulation de pression selon la revendication 1, **caractérisé en ce que** la partie électronique (68) est bridée directement au corps de bobine (8) portant la bobine (10).

3. Dispositif de soupape de régulation de pression selon la revendication 1, **caractérisé en ce que** la partie électronique (68) est bridée directement à un porte-filtre (62a) portant un filtre (60) associé au raccord de dispositif consommateur (42) et entourant au moins en partie la partie de soupape (4).

4. Dispositif de soupape de régulation de pression selon au moins l'une quelconque des revendications précédentes, **caractérisé en ce que** l'on prévoit une connexion hydraulique (94 ; 94a) entre le capteur de pression (70) et le raccord de dispositif consommateur (42 ; 42a) ou avec une chambre de pression (70) réalisée dans la partie de soupape (4) et en liaison avec le raccord de dispositif consommateur (42).

5. Dispositif de soupape de régulation de pression selon la revendication 4 et la revendication 2, **caractérisé en ce que** la connexion hydraulique (94) est réalisée dans le corps de bobine (8).

6. Dispositif de soupape de régulation de pression selon la revendication 4 et la revendication 3, **caractérisé en ce que** la connexion hydraulique (94a) est réalisée dans le porte-filtre (62a).

7. Dispositif de soupape de régulation de pression selon au moins l'une quelconque des revendications précédentes, **caractérisé en ce que** la partie électronique (68) comprend en outre au moins l'un des dispositifs suivants : une alimentation en tension pour le capteur de pression (70), une interface de communication avec un appareil de commande électronique (66) maître, un microprocesseur ou une électronique de régulation analogique, qui, à partir d'un écart de réglage entre une valeur de pression réelle et une valeur de pression de consigne, calcule une valeur de commande, une électronique de puissance (74) pour l'alimentation en tension de la bobine, des condensateurs pour le filtrage des signaux et pour la protection antiparasites, et un dispositif de diagnostic.

8. Dispositif de soupape de régulation de pression selon la revendication 7, **caractérisé en ce que** la soupape de régulation de pression (1) est en liaison avec l'appareil de commande électronique (66) par le biais de trois conduites électrique : une conduite (82) pour l'alimentation en tension, une autre conduite bidirectionnelle (84) pour le transfert de la valeur de guidage (pression) et le diagnostic et/ou des informations d'état, et une conduite supplémentaire (86) pour la connexion à la masse.

9. Dispositif de soupape de régulation de pression selon au moins l'une quelconque des revendications 1 à 6, **caractérisé en ce que** la partie électronique (68) ne contient que le capteur de pression (70) et le signal de capteur est transféré par une conduite de signaux à un appareil de commande maître (66).
